# EUROPEAN PATENT APPLICATION

(11) **EP 2 421 298 A1**
(43) Date of publication of application: **22.02.2012**
(21) Application number: 10290449.7
(22) Date of filing: 17.08.2010
(51) Int. Cl.: H04W 24/02, H04W 48/08

(54) **Transmitting radio configuration parameters from a base station to a relay node**

(71) Applicant: Alcatel Lucent, 75007 Paris (FR)
(72) Inventor: Godin, Philippe, 78220 Viroflay (FR); Palat, Sudeep K., Swindon SN5 6EE (GB)
(74) Representative: Richardt Patentanwälte

(57) **Abstract**

The invention relates to a method of transmitting radio configuration parameters from a base station (102) to a relay node (100) in a wireless telecommunication system, the method comprising the step of transmitting a signal (106) from the base station to the relay node over an air interface via a protocol, the protocol being adapted to communication between two network nodes, wherein the signal is indicative of the radio configuration parameters and/or at least one unique cell global identity.

## Description

### Field of the invention

The invention relates to the field of wireless telecommunication, more specifically to transmitting radio configuration parameters from a base station to a relay node.

### Background and related art

The relay node functions as a relay between a user equipment and a base station. The user equipment may be for example a mobile phone, a PDA, or a laptop. The relay node extends the coverage area of the base station. By placing a relay node at a suitable position the coverage area of the base station and/or an overall data rate within a cell of the base station may be significantly increased. A user equipment may for example communicate directly with the base station or via a relay node. In case of communication with a relay node data transmitted from the user equipment to the relay node is forwarded to the base station. Data which is indicated to be sent to the user equipment is transmitted from the base station to the relay node. The relay node forwards the data to the user equipment.

### Summary

It is an object of the present invention to provide an improved method of transmitting radio configuration parameters from a base station to a relay node, an improved base station, an improved relay node, and improved computer readable storage media for a relay node and a base station apparatus.

These objects are achieved by the method, the base station apparatus, the relay node and the computer readable storage media according to the independent claims. Embodiments of the invention are given in the dependent claims.

The invention relates to a method of transmitting radio configuration parameters from a base station to a relay node in a wireless telecommunication system. The method comprises the step of transmitting a signal from the base station to the relay node over an air interface via a protocol. The protocol is adapted to communication between two network nodes. The signal is indicative of the radio configuration parameters and/or at least one unique cell global identity.

The at least one unique cell global identity is unique in the wireless telecommunication network. The at least one cell global identity is used for determining an identifier of the base station. And the identifier of the base station is used for routing signals in the wireless telecommunication network. Preferably, the cell global identity consists of a public land mobile network (PLNM) identifier plus 28 bits. The PLMN identifier plus the leftmost 20 bits of the 28 bits are equal to the relay node identifier. The PLMN identifier is an identifier for the wireless telecommunication network. Each network provider has a corresponding PLMN identifier.

One cell global identity is assigned to one relay node cell. In other words, more than one cell global identity is transmitted to the relay node, if the relay node serves more than one relay node cell.

The protocol used for transmitting the signal is intentionally adapted to a communication between two network nodes. For example the protocol may be an S1 protocol between an MME (MME = Mobility Management Entity) and an eNB (eNB = enhanced NodeB) in 3GPP LTE (3GPP = 3rd Generation Partnership Project; LTE = Long Term Evolution) or an X2 protocol between two eNBs in 3GPP LTE. The protocol is known to the relay node and the base station. Therefore, configuration messages defined in the S1 or X2 protocol are terminated in both the relay node and the base station and may thus be used for transmitting the radio configuration parameters from the base station to the relay node. In other words, the message overhead is reduced and there is no need to define or use a redundant radio message for this. The configuration messages may be a setup configuration messages or an update configuration messages. A setup configuration message is transmitted during a start-up phase of the relay node. An update configuration is transmitted for updating the radio configuration parameters of the relay node.

The configuration may be used by the relay node for communicating with user equipments. The configuration may for example define the type of the relay node. The relay node may be for example an in-band or an out-of-band relay node. An in-band relay node transmits signals with the same frequency as the base station, while an out of band relay node transmits signals with a different frequency than the base station. Additionally, the configuration may comprise the frequency used by the relay node, the subframe configuration, and/or start symbols such as start symbols of a Reverse Physical Downlink Control Channel (R-PDCCH).

The signal being indicative of the radio configuration parameters and of the cell global identity is advantageous, because the signal overhead is reduced. The cell global identity and the radio configuration parameters are required by the relay node for communication in the wireless telecommunication network. Additional messages are avoided by transmitting both of them via the signal over the protocol being intended to be used for communication between two network nodes. The signal may for example be comprised by a configuration setup message or by a configuration update message. Thus, only one message is needed for transmitting the radio configuration parameters and the cell global identity. Additionally, the configuration setup message and/or the configuration update message may comprise further parameters like network configuration parameters. Thus, radio configuration parameters, network configuration parameters and the cell global identity are transmitted by transmitting the configuration setup message and/or the configuration update message.

According to embodiments of the invention the wireless telecommunication network is a digital cellular telecommunication network.

According to embodiments of the invention the relay node is adapted to forwarding data received from the base station to a user equipment. The relay node is adapted to use the radio configuration parameters for forwarding the data to the user equipment.

According to embodiments of the invention the method further comprises the step of using the radio configuration parameters for wireless communication between the relay node and at least one user equipment.

According to embodiments of the invention a configuration setup or configuration update message comprises the signal. The configuration setup or configuration update message also comprises network configuration parameters. The configuration setup or configuration update message may be for example transmitted when a relay node is switched on. In this case network configuration parameters are transmitted from the base station to the relay node. The network configuration parameters may be for example a list of tracking areas, or a list of PLMNs, or a list of cells. The radio configuration parameters and/or the at least one global cell identity may be comprised by the configuration setup or configuration update message. A container in the network configuration message for example may also comprise the radio configuration parameters and/or the at least one global cell identity. The container may be for example labeled as containing radio configuration parameters and/or the at least one unique cell global identity and information within the container may be extracted by the relay node. Thus, the network configuration parameters and the radio configuration parameters and/or the at least one unique cell global identity are transmitted from the base station to the relay node by transmitting a network configuration setup or configuration update message. Preferably, the configuration setup or configuration update message may be transmitted from the base station to the relay node during a start-up phase of the relay node.

According to embodiments of the invention the signal is transmitted from the base station to the relay node using a configuration update procedure. During the configuration update procedure the signal may be for example transmitted using the S1 or X2 protocol. The update procedure according to the S1 or X2 protocol may be for example a so-called eNB configuration update, or a MME configuration update procedure. In this case a container of the configuration update message may also comprise the radio configuration parameters and/or the unique cell global identity. Embodiments of the invention are advantageous because the configuration update procedure may be used for the configuration update and for updating the radio configuration parameters and/or the unique cell global identity. Thus, the message overhead is reduced and applying a redundant dedicated message is avoided. According to embodiments of the invention the radio configuration parameters comprise a relay node type, a frequency, sub-frames configuration, and/or start symbols. According to embodiments of the invention a container of the configuration setup or configuration update message comprises the radio configuration parameters and/or the signal.

According to embodiments of the invention the method further comprises a step of assigning a relay node identifier to the relay node. The relay node identifier is identical to a base station identifier of the base station. This is advantageous for handover procedures and routing signals.

At least one unique cell global identity is determined for at least one relay node cell by the base station. One relay node may for example serve several relay node cells. Each relay node cell corresponds to a unique cell global identity. Thus, in case of several relay node cells being served by different relay nodes it is possible that two relay node cells could have the same cell global identity. This is avoided by the base station assigning the relay node identifier. In other words, the base station determines at least one unique cell global identity for at least one relay node cell and avoids determining one cell global identity for more than one relay node cell.

The at least one unique cell global identity is assigned to the at least one relay node cell by the base station.

According to embodiments of the invention the at least one unique cell global identity is transmitted together with the signal using the S1 or X2 protocol. Alternatively, the unique cell global identity is comprised by the signal. In general, the at least one unique cell global identity is transmitted together with the radio configuration parameters from the base station to the relay node. A container of a network configuration message, a configuration setup message or a configuration update message may comprise the at least one unique cell global identity.

In another aspect the invention relates to a base station apparatus. The base station apparatus comprises means for transmitting a signal from the base station to a relay node over an air interface via a protocol. The protocol is adapted to communication between two network nodes. The signal is indicative of radio configuration parameters and/or at least one unique cell global identity.

In another aspect the invention relates to a relay node. The relay node comprises means for receiving a signal from a base station over an air interface via a protocol. The protocol is adapted to communication between two network nodes. The signal is indicative of radio configuration parameters and/or at least one unique cell global identity. The relay node further comprises means for using the radio configuration parameters for wireless telecommunication with at least one user equipment.

In yet another aspect the invention relates to a computer readable storage medium. The computer readable storage medium comprises instructions that when executed by a base station cause the base station to perform a method of transmitting radio configuration parameters from the base station to a relay node. The instructions may be for example program instructions executed by a processor of the base station. The method comprises transmitting a signal from the base station to the relay node over an air interface via a protocol. The protocol is adapted to communication between two network nodes. The signal is indicative of the radio configuration parameters and/or at least one unique cell global identity.

In yet another aspect the invention relates to a computer readable storage medium. The computer readable storage medium comprises instructions that when executed by a relay node cause the relay node to perform a method of receiving and taking into use radio configuration parameters and/or at least one unique cell global identity from a base station. The instructions may be for example program instructions executed a processor of the relay node.

The method comprises receiving a signal from the base station over an air interface via a protocol. The protocol is adapted to communication between two network nodes. The signal is indicative of the radio configuration parameters and/or at least one unique cell global identity. The radio configuration parameters are used by the relay node for a wireless communication with at least one user equipment.

### Brief description of the drawings

In the following preferred embodiments of the invention will be described, by way of example only, and with reference to the drawings in which:
- Figure 1: is a schematic view of a base station transmitting a signal to a relay node, the signal being indicative of radio configuration parameters, and

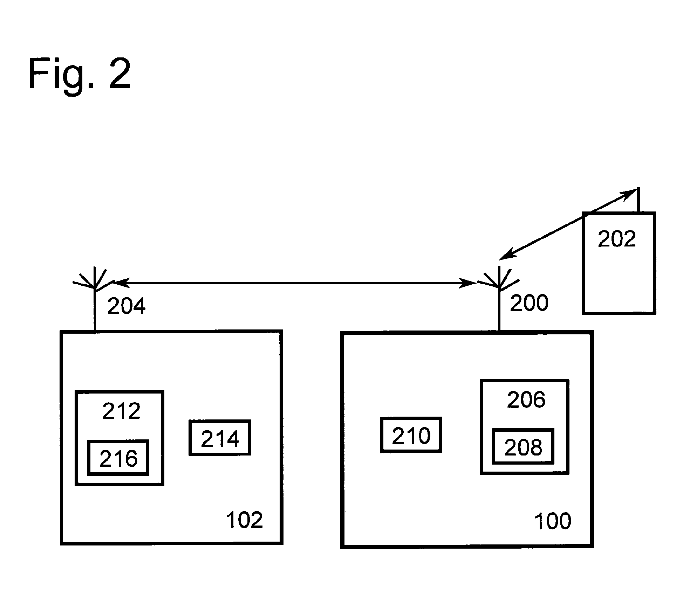

- Figure 2: is a block diagram of a relay node and a base station.

### Detailed description

Like numbered elements in these figures are either identical elements or perform the same function. Elements which have been discussed previously will not necessarily be discussed in later figures if the function is identical.

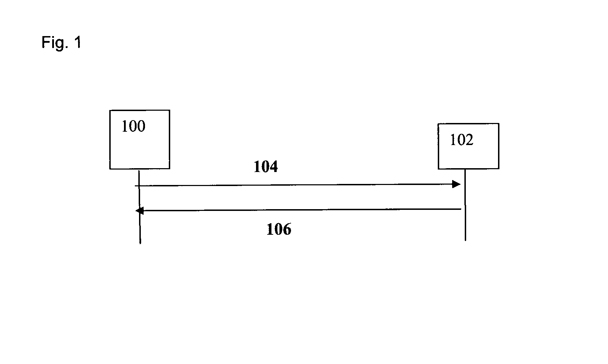

Figure 1 is a schematic view of a relay node 100 and a base station 102 exchanging signals 104 and 106. Relay node 100 transmits signal 104 to base station 102. The signal 104 is indicative of requesting a configuration setup or configuration update signal from the base station 102. The signal 104 may be for example transmitted from the relay node to the base station 102 during a start up procedure of relay node 100 after relay node 100 has been switched on. The signal 104 requesting a response from base station 102 may also be transmitted during a configuration update procedure. Signals 104 and 106 are exchanged according to a protocol, which is adapted to be used for communication between two network nodes. A network node may be for example a base station such as base station 102 and/or a central network entity such as a mobility management entity (MME). After having received signal 104 the base station 102 transmits signal 106 to relay node 100. Signal 106 is indicative of radio configuration parameters. The radio configuration parameters are adapted to be used by the relay node 100 for communication with a user equipment (not depicted). Radio configuration parameters may be for example the type of the relay node, the frequency to be used by the relay node for communication with a user equipment, sub frames configuration, and/or start symbols to be used by the relay node for telecommunication with at least one user equipment. The signal 106 may be comprised by a configuration setup or configuration update message. The configuration setup or configuration update message may also comprise network configuration parameters. By transmitting the network configuration parameters and the radio configuration parameters within one single setup or configuration message the message overhead is reduced and signaling traffic is reduced. The radio configuration parameters may also for example be comprised by a container in the configuration setup or configuration update message.

Additionally or alternatively the signal 106 also comprises at least one cell global identity for at least one relay node cell. The relay node 100 may for example serve a plurality of relay node cells. For each relay node cell a unique cell global identity is required. The cell global identity for each relay node cell is determined by base station 102 and transmitted to relay node 100. Transmitting the at least one relay node cell global identity may be performed for example by adding the cell global identity to signal 106 or by transmitting the cell global identity together with signal 106 to relay node 100. In other words, the cell global identity may also be comprised by a network configuration or configuration update message or by a configuration setup message. Preferably, the cell global identity is also transmitted via the X2 or S1 protocol.

This is advantageous for avoiding unnecessary message overhead or redundant messages and reducing the traffic and signaling transmitted from base station 102 to relay node 100. The messages used for transmitting signal 106 and/or the at least one cell global identity are also used for transmitting network configuration parameters. Thus, no new messages being exchanged between relay node 100 and base station 102 need to be defined for allowing transmission of signal 106 and/or the at least once cell global identity from base station 102 to relay node 100.

Figure two is a block diagram of a relay node 100 and a base station 102. The relay node 100 comprises means 200 for communication with a user equipment 202 and base station 102. The means 200 may be for example an antenna. User equipment 202 may be for example a mobile phone. Base station 102 comprises means 204 for communicating with relay node 100. Means 204 may be for example an antenna. Thus, relay node 100 and base station 102 are adapted for communicating with each other via an air interface. According to embodiments of the invention communication between relay node 100 and base station 102 is performed according to a protocol, which is adapted to be used for communication between two network nodes such as a base station and/or a mobility management entity (MME). The protocol may be for example an S1 or a X2 protocol. Further, relay node 100 comprises a data storage 206. In the data storage 206 a program 208 is stored. The program 208 comprises instructions. Relay node 100 further comprises a processor 210. Processor 210 is adapted for executing program instructions 208. For example, when relay node 100 is switched on, processor 210 executes program instructions 208. Program instructions 208 cause the relay node 100 to request radio configuration parameters from base station 102. Additionally or alternatively cell global identities may be requested by relay node 100 from base station 102. Base station 102 comprises a data storage 212 and a processor 214. In data storage 212 program instructions 216 are stored. When receiving a request from relay node 100 for transmitting radio configuration parameters and/or at least one cell global identity, the program instructions 216 executed by processor 214 cause the base station 102 to transmit a signal to relay node 100, the signal being indicative of the radio configuration parameters and/or the at least one cell global identity. The signal may be transmitted together with network configuration parameters or the signal may be comprised by a configuration setup or configuration update message. The signal may be for example comprised by a container in the network configuration message. When the signal is received by relay node 100 the program instructions 208 cause the relay node 100 to use the received radio configuration parameters and/or the at least one cell global identity for communication with mobile device 202.

### List of reference numerals

- 100: relay node
- 102: base station
- 104: signal
- 106: signal
- 200: antenna
- 202: user equipment
- 204: antenna
- 206: data storage
- 208: program instructions
- 210: processor
- 212: data storage
- 214: processor
- 216: program instructions

## Claims

1. A method of transmitting radio configuration parameters from a base station (102) to a relay node (100) in a wireless telecommunication system, the method comprising the step of:
- transmitting a signal (106) from the base station to the relay node over an air interface via a protocol, the protocol being adapted to communication between two network nodes, wherein the signal is indicative of the radio configuration parameters and/or at least one unique cell global identity.

2. Method according to claim 1, wherein the method further comprises the relay node applying the radio configuration parameters for forwarding data received from the base station to a user equipment.

3. Method according to any one of the preceding claims, wherein the method further comprises the step of
- using the radio configuration parameters for wireless telecommunication between the relay node and at least one user equipment.

4. Method according to any one of the preceding claims, wherein a configuration setup or configuration update message comprises the signal, and wherein the configuration setup or configuration update message also comprises network configuration parameters.

5. Method according to any one of the preceding claims, wherein the signal is transmitted during a start-up phase of the relay node.

6. Method according to any one of the preceding claims, wherein the protocol is a S1 or an X2 protocol.

7. Method according to claim 6, wherein the signal is transmitted from the base station to the relay node using a configuration update procedure.

8. Method according to any one of the preceding claims, wherein the radio configuration parameters comprise a relay node type, a frequency, subframe configurations, and/or start symbols.

9. Method according to any one of the claims 4-8, wherein the signal is comprised by a container in the configuration setup or configuration update message.

10. Method according to any one of the preceding claims, wherein the method further comprises the steps of:
- assigning a relay node identifier to the relay node, the relay node identifier being identical to a base station identifier of the base station;
- determining the at least unique cell global identity for at least one relay node cell by the base station; and
- assigning the at least one unique cell global identity to the at least one relay node cell by the base station.

11. Method according to claim 10, wherein the at least one unique cell global identity is transmitted together with the signal using the S1 or X2 protocol or comprised by the signal.

12. A base station apparatus (102), wherein the base station apparatus comprises:
- means (204; 214) for transmitting a signal from the base station to a relay node over an air interface via a protocol, the protocol being adapted to communication between two network nodes, wherein the signal is indicative of radio configuration parameters and/or a unique cell global identity.

13. A relay node (100), wherein the relay node comprises:
- means (200; 210) for receiving a signal from a base station over an air interface via a protocol, the protocol being adapted to communication between two network nodes, wherein the signal is indicative of radio configuration parameters and/or a unique cell global identity; and
- means (210) for using the radio configuration parameters and/or the unique cell global identity for wireless telecommunication with at least one user equipment.

14. A computer-readable storage medium (212), the computer-readable storage medium comprising instructions (216) that when executed by a base station (102) cause the base station to perform a method of transmitting radio configuration parameters from the base station to a relay node, the method comprising
- transmitting a signal (106) from the base station to the relay node over an air interface via a protocol, the protocol being adapted to communication between two network nodes, wherein the signal is indicative of the radio configuration parameters and/or a unique cell global identity.

15. A computer-readable storage medium (206), the computer-readable storage medium comprising instructions (208) that when executed by a relay node (100) cause the relay node to perform a method of receiving radio configuration parameters from a base station, the method comprising:
- receiving a signal (106) from the base station over an air interface via a protocol, the protocol being adapted to communication between two network nodes, wherein the signal is indicative of the radio configuration parameters and/or a unique cell global identity; and
- using the radio configuration parameters and/or the unique cell global identity for wireless telecommunication with at least one user equipment.

## Amended claims

### Amended claims in accordance with Rule 137(2) EPC.

**1.** A method of transmitting radio radio configuration parameters from a base station (102) to a relay node (100) in a wireless telecommunication system, the method comprising the steps of:
- transmitting a signal (106) from the base station (102) to the relay node (100) over an air interface via a protocol, the protocol being adapted to communication between two network nodes, wherein the signal is indicative of the radio configuration parameters and/or at least one unique cell global identity;
- assigning a relay node identifier to the relay node (100), the relay node identifier being identical to a base station identifier of the base station (102);
- determining the at least one unique cell global identity for at least one relay node cell by the base station (102); and
- assigning the at least one unique cell global identity to the at least one relay node cell by the base station (102).

**2.** Method according to claim 1, wherein the method further comprises the relay node (100) applying the radio configuration parameters for forwarding data received from the base station (102) to a user equipment.

**3.** Method according to any one of the preceding claims, wherein the method further comprises the step of
- using the radio configuration parameters for wireless telecommunication between the relay node (100) and at least one user equipment.

**4.** Method according to any one of the preceding claims, wherein a configuration setup or configuration update message comprises the signal, and wherein the configuration setup or configuration update message also comprises network configuration parameters.

**5.** Method according to any one of the preceding claims, wherein the signal is transmitted during a start-up phase of the relay node (100).

**6.** Method according to any one of the preceding claims, wherein the protocol is a S1 or an X2 protocol,

**7.** Method according to claim 6, wherein the signal is transmitted from the base station (102) to the relay node (100) using a configuration update procedure.

**8.** Method according to any one of the preceding claims, wherein the radio configuration parameters comprise a relay node type, a frequency, subframe configurations, and/or start symbols.

**9.** Method according to any one of the claims 4-8, wherein the signal is comprised by a container in the configuration setup or configuration update message.

**10.** Method according to claim 9, wherein the at least one unique cell global identity is transmitted together with the signal using the S1 or X2 protocol or comprised by the signal.

**11.** A base station apparatus (102), wherein the base station apparatus comprises:
- means (204; 214) for transmitting a signal from the base station to a relay node over an air interface via a protocol, the protocol being adapted to communication between two network nodes, wherein the signal is indicative of radio configuration parameters and/or a unique cell global Identity;
- means for determining the at least one unique cell global identity for at least one relay node cell; and
- means for assigning the at least one unique cell global identity to the at least one relay node cell.

**12.** A relay node (100), wherein the relay node comprises:
- means (200; 210) for receiving a signal from a base station (102) over an air interface via a protocol, the protocol being adapted to communication between two network nodes, wherein the signal is indicative of radio configuration parameters and/or a unique cell global identity;
- means (210) for using the radio configuration parameters and/or the unique cell global identity for wireless telecommunication with at least one user equipment;and
- means for assigning a relay node identifier to the relay node (100), the relay node identifier being identical to a base station identifier of the base station (102).

**13.** A computer-readable storage medium (212), the computer-readable storage medium comprising instructions (216) that when executed by a base station (102) cause the base station to perform a method of transmitting radio configuration parameters from the base station to a relay node, the method comprising
- transmitting a signal (106) from the base station to the relay node over an air interface via a protocol, the protocol being adapted to communication between two network nodes, wherein the signal is indicative of the radio configuration parameters and/or a unique cell global identity;
- determining the at least unique cell global identity for at least one relay node cell; and
- assigning the at least one unique cell global identity to the at least one relay node cell.

**14.** A computer-readable storage medium (206), the computer-readable storage medium comprising instructions (208) that when executed by a relay node (100) cause the relay node to perform a method of receiving radio configuration parameters from a base station, the method comprising:
- receiving a signal (106) from the base station over an air interface via a protocol, the protocol being adapted to communication between two network nodes, wherein the signal is indicative of the radio configuration parameters and/or a unique cell global identity;
- assigning a relay node identifier to the relay node (100), the relay node identifier being identical to a base station identifier of the base station (102); and
- using the radio configuration parameters and/or the unique cell global identity for wireless telecommunication with at least one user equipment.
